(19)

Europäisches
Patentamt
European
Patent Office
Office européen
des brevets

(11) **EP 4 675 242 A1**

(12) **EUROPEAN PATENT APPLICATION**
published in accordance with Art. 153(4) EPC

(43) Date of publication:
**07.01.2026 Bulletin 2026/02**

(21) Application number: **24763554.3**

(22) Date of filing: **07.02.2024**

(51) International Patent Classification (IPC):
**G01J 3/50** *(2006.01)*      **G01J 3/02** *(2006.01)*

(52) Cooperative Patent Classification (CPC):
**G01J 3/02; G01J 3/50**

(86) International application number:
**PCT/JP2024/004135**

(87) International publication number:
**WO 2024/181070 (06.09.2024 Gazette 2024/36)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **28.02.2023 JP 2023029998**

(71) Applicant: **KONICA MINOLTA, INC.
Tokyo 100-7015 (JP)**

(72) Inventors:
• **TANAKA Hiroki
  Tokyo 100-7015 (JP)**
• **TERAOKA Yoshitaka
  Tokyo 100-7015 (JP)**

(74) Representative: **Gille Hrabal
Partnerschaftsgesellschaft mbB
Patentanwälte
Brucknerstraße 20
40593 Düsseldorf (DE)**

(54) **COLOR MEASUREMENT DEVICE, DATA PROCESSING DEVICE, MEASUREMENT CORRECTION METHOD, AND PROGRAM**

(57)     A color measurement device (1) includes an illumination section (11), (12) that illuminates a measurement object (100), a photoelectric conversion section (133) that is two-dimensional, and disperses, by wavelength, light from a plurality of positions on a surface of the measurement object illuminated by the illumination section, receives the light, and converts the light into an electric signal, calculation means (14) that calculates recursive illumination correction coefficients for correcting an error for a pixel caused by re-illumination in the color measurement device (1) based on a light reception result by the photoelectric conversion section for a plurality of samples whose measurement surface lightness differs from each other, each of which has uniform lightness among different portions across a measurement surface, and correction means (14) that corrects a measurement value of the measurement object using the recursive illumination correction coefficients calculated by the calculation means (14).

[FIG. 1]

EP 4 675 242 A1

**Description**

Technical Field

The present invention relates to a color measurement device, a data processing apparatus, a measurement correction method, and a program that are suitable for measuring the color and the reflectance of a measurement object having a two-dimensional structure such as a texture.

Background Art

A two-dimensional color measurement device is known as a color measurement device capable of easily measuring the color and the spectral reflectance of a sample having a two-dimensional structure such as a texture. The two-dimensional color measurement device includes an illumination section that illuminates a measurement object and a two-dimensional photoelectric conversion section that disperses, by wavelength, reflected light from a plurality of positions on a surface of the measurement object illuminated by the illumination section and converts the light into an electric signal.

A user can acquire the lightness distribution and chromaticity distribution that are spatial, for each wavelength by dispersing, by wavelength, the reflected light from the plurality of positions on the surface of the measurement object and measuring the light using the color measurement device.

As described above, when the two-dimensional color measurement device is used, a main object is to acquire the spatial distribution for each wavelength. Thus, the important performance of the color measurement device includes no error in measurement values in each portion of the measurement surface, in other words, the in-plane uniformity.

That is, when measuring the measurement object having uniform lightness among different portions across its measurement surface in which the measurement value distribution for each wavelength can be considered to be substantially uniform, ideally, each pixel of the two-dimensional photoelectric conversion section is expected to yield exactly the same measurement result. However, in an actual color measurement device, it is difficult to acquire a completely uniform result only with hardware contrivance due to factors inhibiting the in-plane uniformity, typified by the following.

[Non-uniformity of Illumination]

Non-uniformity of illumination occurs when the intensity with which a measurement section is illuminated varies depending on location due to factors such as intensity unevenness and orientation properties of a light source, and the reflectance/transmittance unevenness of optical components included in an illumination system.

[Non-uniformity of Light Reception]

Non-uniformity of light reception occurs when light reception sensitivity varies depending on location due to factors such as the reflectance/transmittance unevenness of optical components included in a light reception system, and diffraction efficiency unevenness of a spectral element such as a diffraction grating in a case of a spectrophotometric device.

[Non-uniformity of Sensor Sensitivity]

Pixel-to-pixel non-uniformity of sensitivity (PRNU) may occur in the light reception sensitivity of a sensor used for a photoelectric conversion section.

When poor in-plane uniformity occurs due to these constituent members of the measurement device, non-uniformity occurs in the measurement result even in a case of a sample to be measured in which the measurement value distribution for each wavelength can be considered to be substantially uniform among different portions across its measurement surface. Accordingly, it is desirable to minimize such non-uniformity to the greatest extent possible. While hardware-side measures can be certainly taken, in-plane unevenness correction is often performed based on numerical calculations, as a measure against the errors that cannot be fully eliminated by such a hardware-side measures alone.

For example, Patent Literature 1 discloses a method of correcting a measurement value using a known sample in which the distribution of absorptance for each wavelength can be considered to be substantially uniform among different portions across its measurement surface, particularly in order to eliminate illumination intensity unevenness.

Citation List

Patent Literature

Patent Literature 1: US 9784614 B2

Summary of Invention

Technical Problem

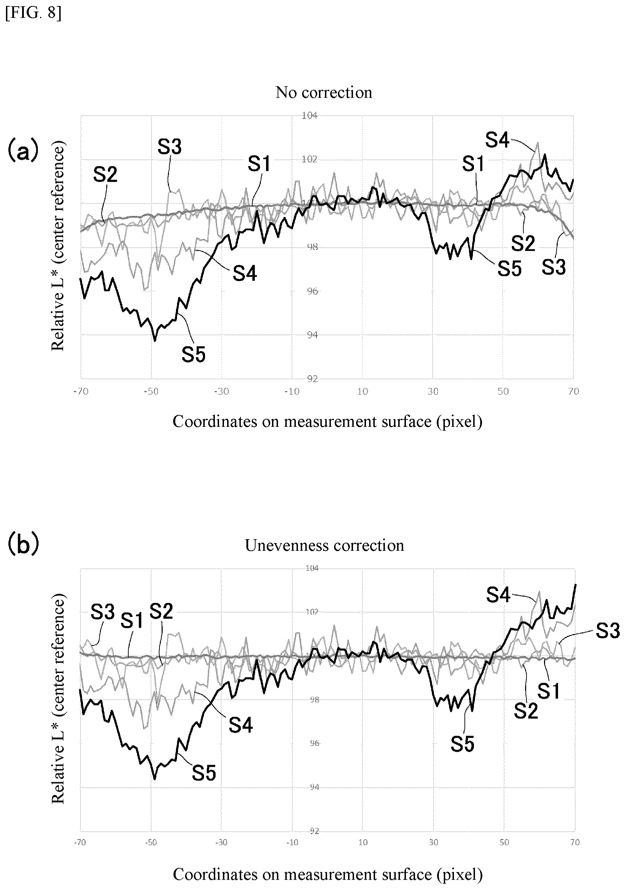

However, in the related art, there is an issue that the correction accuracy tends to be poor for a measurement object having lightness other than those of a calibration point. For example, in the related art, an attempt is made to solve the poor uniformity using a single sample in which the distribution of absorptance for each wavelength can be considered to be substantially uniform among different portions across its measurement surface. However, when samples whose lightness differs from each other are actually measured by the two-dimensional color measurement device, the result of Fig. 8(a) and (b) is obtained.

Fig. 8 (a) illustrates a relative spatial intensity distribution before correction, and Fig. 8 (b) illustrates a relative spatial intensity distribution after unevenness correction based on the related art, respectively. Specifically, they illustrates the ratios of color values L*, obtained from the two-dimensional spectral reflectance of a white calibration plate and achromatic reference samples measured using an integrating sphere (d:8) through the SCI method, along a cross-sectional line passing through the center of the measurement diameter. Note that in each sample, the center of the measurement diameter is normalized to be 100. In each graph, S1 represents the white calibration plate, and S2 to S5 represent the achromatic reference samples whose lightness differs from each other.

As illustrated in Fig. 8 (a), the relative spatial intensity distribution significantly varies between the samples whose lightness differs from each other. Accordingly, as illustrated in Fig. 8 (b), when the correction coefficient is calculated based on an 11 × 11 pixel moving average for the white plate and each tile is corrected, an improvement is observed in the white plate, whereas little to no improvement is observed, particularly in S5 serving as a low-lightness reference sample, indicated by the thick line.

That is, although the one-point calibration technique as in the related art can ensure the in-plane uniformity for lightness close to that of a sample (calibration point) used for correction coefficient calculation, there remains the issue that the in-plane uniformity cannot be ensured in a sample having different lightness.

An object of the present invention is to provide a color measurement device, a data processing apparatus, a measurement correction method, and a program capable of improving the accuracy of a measurement result by suppressing errors in measurement values among different portions across its measurement surface of a measurement object.

Solution to Problem

The above-described object is achieved by the following means.

(1) A color measurement device including:

an illumination section that illuminates a measurement object;
a photoelectric conversion section that is two-dimensional, and disperses, by wavelength, light from a plurality of positions on a surface of the measurement object illuminated by the illumination section, receives the light, and converts the light into an electric signal;
calculation means that calculates recursive illumination correction coefficients for correcting an error for a pixel caused by re-illumination in the color measurement device based on a light reception result by the photoelectric conversion section for a plurality of samples whose measurement surface lightness differs from each other, each of which has uniform lightness among different portions across a measurement surface; and
correction means that corrects a measurement value of the measurement object using the recursive illumination correction coefficients calculated by the calculation means.

(2) The color measurement device according to the aforementioned Item (1), wherein

the calculation means calculates, based on the light reception result for the samples by the photoelectric conversion section, an unevenness correction coefficient for correcting pixel-to-pixel non-uniformity caused by a constituent member of the color measurement device, and
the correction means corrects the measurement value of the measurement object using the unevenness correction coefficient calculated by the calculation means.

(3) The color measurement device according to the aforementioned Item (1), wherein the calculation means calculates the recursive illumination correction coefficients for a wavelength that is dispersed.

(4) The color measurement device according to the aforementioned Item (2), wherein the calculation means calculates the unevenness correction coefficient for a wavelength that is dispersed.

(5) The color measurement device according to the aforementioned Item (1), wherein the calculation means calculates the recursive illumination correction coefficients for a tristimulus value.

(6) The color measurement device according to the aforementioned Item (2), wherein the calculation means calculates the unevenness correction coefficient for a tristimulus value.

(7) The color measurement device according to the aforementioned Item (1), wherein the samples are samples in which a measurement value distribution for a wavelength can be considered to be substantially uniform.

(8) The color measurement device according to the aforementioned Item (1), wherein

the calculation means calculates, through Expression 1 below, a second-order coefficient $a2\_2(x, y, \lambda)$, a first-order coefficient $a2\_1(x, y, \lambda)$, and a zero-order coefficient $a2\_0(x, y, \lambda)$, when performing approximation by a quadratic function in which a horizontal axis represents spectral reflectance and a vertical axis represents deviation from a reference value, as the recursive illumination correction coefficients, and

the correction means corrects, through Expression 2 below, the measurement value using the quadratic function for the recursive illumination correction coefficients that have been calculated.

[Expression 1]

$$a2\_2(x, y, \lambda) = ((Y1-Y2)*(X1-X3)-(Y1-Y3)*(X1-X2))/((X1-X2)*(X1-X3)*(X2-X3))$$

$$a2\_1(x, y, \lambda) = (Y1-Y2)/(X1-X2)-(a2\_2)*(X1+X2)$$

$$a2\_0(x, y, \lambda) = Y1-(a2\_2)*X1*X1-(a2\_1)*X1$$

Note that x, y represents xy coordinates on a measurement surface, and $\lambda$ represents a wavelength. For three samples, by letting respective target measurement values be $Rc\_1(\lambda)$, $Rc\_2(\lambda)$, and $Rc\_3(\lambda)$, measurement values by a color measurement device to be corrected be $Rs\_1(\lambda)$, $Rs\_2(\lambda)$, and $Rs\_3(\lambda)$, and a recursive illumination error be $\Delta Rn = Rs\_n(x, y, \lambda)-Rc\_n(x, y, \lambda)$ (n = 1, 2, 3), the following expressions are satisfied.

$$(X1, Y1) = (Rs\_1(x, y, \lambda), \Delta R1(x, y, \lambda))$$

$$(X2, Y2) = (Rs\_2(x, y, \lambda), \Delta R2(x, y, \lambda))$$

$$(X3, Y3) = (Rs\_3(x, y, \lambda), \Delta R3(x, y, \lambda))$$

[Expression 2]

$Ref_{rerefcorr}(x, y, \lambda) = Ref_0(x, y, \lambda) - (a2\_2(x, y, \lambda) \times Ref_0(x, y, \lambda)\char`^2+a2\_1(x, y, \lambda) \times Ref_0(x, y, \lambda)+ a2\_0(x, y, \lambda))$     [Mathematical Expression 1]

Note that, $Ref_0(x, y, \lambda)$ represents a measurement value before correction, and $Ref_{rerefcorr}(x, y, \lambda)$ represents a measurement value after correction.

(9) The color measurement device according to the aforementioned Item (2), wherein

by letting a target measurement value be $Count_{target}(\lambda)$ and a measurement value of a second sample be $Count(x, y, \lambda)$, the calculation means calculates an unevenness correction coefficient $Mura(x, y, \lambda)$ through the following expression,

[Mathematical Expression 2]

$$Mura(x, y, \lambda) = \frac{Count_{target}(\lambda)}{Count(x, y, \lambda)}$$

and

the correction means corrects the measurement value $Count(x, y, \lambda)$ to a measurement value after correction Count$_{corr}$(x, y, λ) through the following expression.

[Mathematical Expression 3]

$$Conut_{corr}(x, y, \lambda) = Mura(x, y, \lambda) * Count(x, y, \lambda)$$

(10) The color measurement device according to the aforementioned Item (1), wherein the samples include a gray or black tile.

(11) The color measurement device according to the aforementioned Item (2), wherein the samples include a white plate.

(12) The color measurement device according to the aforementioned Item (1), wherein the calculation means calculates the recursive illumination correction coefficients for a pixel, and then calculates a weighted average of adjacent pixels to obtain final correction coefficients.

(13) The color measurement device according to the aforementioned Item (1), wherein the calculation means approximates each of the recursive illumination coefficients by a polynomial when the recursive reflection correction coefficients for pixels have continuity, to calculate coefficients for only a single pixel, and then calculates coefficients for all the pixels based on a positional coordinate on the measurement surface, to obtain final correction coefficients.

(14) The color measurement device according to the aforementioned Item (2), wherein the calculation means calculates the unevenness correction coefficient for a pixel, and then calculates a weighted average of adjacent pixels to obtain a final correction coefficient.

(15) The color measurement device according to the aforementioned Item (2), wherein the calculation means calculates the unevenness correction coefficient for only a single pixel, and then calculates correction coefficients for all pixels based on positional coordinate relationship with known in-plane unevenness caused by the constituent member of the measurement device, to obtain a final correction coefficient.

(16) The color measurement device according to any one of the aforementioned Items 1 to 15, wherein the light from the plurality of positions on the surface of the measurement object is reflected light from a plurality of positions.

(17) The color measurement device according to any one of the aforementioned Items 1 to 15, wherein an integrating sphere in which light from a light source is diffused and reflected by an inner surface is used as the illumination section.

(18) A data processing apparatus including:

reception means that receives, from a color measurement device including an illumination section that illuminates a measurement object, and a photoelectric conversion section that is two-dimensional, and disperses, by wavelength, light from a plurality of positions on a surface of the measurement object illuminated by the illumination section and converts the light into an electric signal, a light reception result by the photoelectric conversion section for a plurality of samples whose measurement surface lightness differs from each other, each of which has uniform lightness among different portions across a measurement surface;

calculation means that calculates recursive illumination correction coefficients for correcting an error for a pixel caused by re-illumination in the color measurement device based on the light reception result received by the reception means; and

correction means that corrects a measurement value of the measurement object using the recursive illumination correction coefficients calculated by the calculation means.

(19) A measurement correction method including:

an illumination step of illuminating, by an illumination section, a plurality of samples whose measurement surface lightness differs from each other, each of which has uniform lightness among different portions across a measurement surface;

a conversion step of dispersing, by wavelength, light from a plurality of positions on a surface of each sample illuminated by the illumination section, receiving the light, and converting the light into an electric signal by a photoelectric conversion section that is two-dimensional;

a calculation step of calculating recursive illumination correction coefficients for correcting an error for a pixel caused by re-illumination in the color measurement device based on a light reception result by the photoelectric conversion section for the samples; and

a correction step of correcting a measurement value of the measurement object using the recursive illumination correction coefficients calculated in the calculation step.

(20) A program for causing a computer to execute:

a reception step of receiving, from a color measurement device including an illumination section that illuminates a measurement object, and a photoelectric conversion section that is two-dimensional, and disperses, by wavelength, light from a plurality of positions on a surface of the measurement object illuminated by the illumination section and converts the light into an electric signal, a light reception result by the photoelectric conversion section for a plurality of samples whose measurement surface lightness differs from each other, each of which has uniform lightness among different portions across a measurement surface;
a calculation step of calculating recursive illumination correction coefficients for correcting an error for a pixel caused by re-illumination in the color measurement device based on the light reception result received in the reception step; and
a correction step of correcting a measurement value of the measurement object using the recursive illumination correction coefficients calculated in the calculation step.

Advantageous Effects of Invention

According to the color measurement device and the measurement correction method according to the present invention, light from the plurality of positions on the surface of the measurement object illuminated by the illumination section is dispersed by wavelength, and received to be converted into electrical signals by the two-dimensional photoelectric conversion section. Based on a light reception result by the photoelectric conversion section for a plurality of samples whose measurement surface lightness differs from each other, each of which has uniform lightness among different portions across its measurement surface, the recursive illumination correction coefficients are calculated for correcting an error for each pixel caused by re-illumination in the measurement device. The measurement value of the measurement object is corrected using the calculated recursive illumination correction coefficients.

Thus, even in a case of a measurement object having lightness that cannot be handled through a conventional unevenness correction for eliminating non-uniformity of constituent members of the color measurement device, such as illumination intensity unevenness, it is possible to improve the accuracy of a measurement result by suppressing errors in the measurement values among different portions across its measurement surface.

The data processing apparatus according to the present invention receives the light reception result by the photoelectric conversion section for a plurality of samples whose measurement surface lightness differs from each other, each of which has uniform lightness among different portions across its measurement surface. The data processing apparatus can calculate, based on the light reception result, the recursive illumination correction coefficients for correcting an error for each pixel caused by re-illumination in the measurement device, and perform processing of correcting a measurement value of the measurement object using the recursive illumination correction coefficients.

According to the program of the present invention, it is possible to cause a computer to execute processing of receiving the light reception result by the photoelectric conversion section for the plurality of samples whose measurement surface lightness differs from each other, each of which has uniform lightness among different portions across its measurement surface. Furthermore, according to the program, it is possible to cause the computer to execute processing of calculating the recursive illumination correction coefficients for correcting an error for each pixel caused by re-illumination in the measurement device based on the light reception result, and correcting a measurement value of the measurement object using the recursive illumination correction coefficients.

Brief Description of Drawings

Fig. 1 is a diagram schematically illustrating a configuration of a color measurement device according to an embodiment of the present invention.
Fig. 2 is a schematic configuration diagram of a light receiver.
Fig. 3 is a configuration diagram when calculation of correction coefficients is performed by a data processing apparatus.
Fig. 4 is a flowchart illustrating a main measurement procedure executed by the color measurement device.
Fig. 5 is a graph for illustrating an influence of recursive illumination characteristics.
Fig. 6 is a graph illustrating an effect of the present invention on a plurality of samples whose lightness differs from each other.
Fig. 7 is another graph illustrating an effect of the present invention on the plurality samples whose lightness differs from each other.
Fig. 8 is a graph for illustrating an issue in the related art.

Description of Embodiments

Hereinafter, an embodiment of the present invention will be described with reference to the drawings.

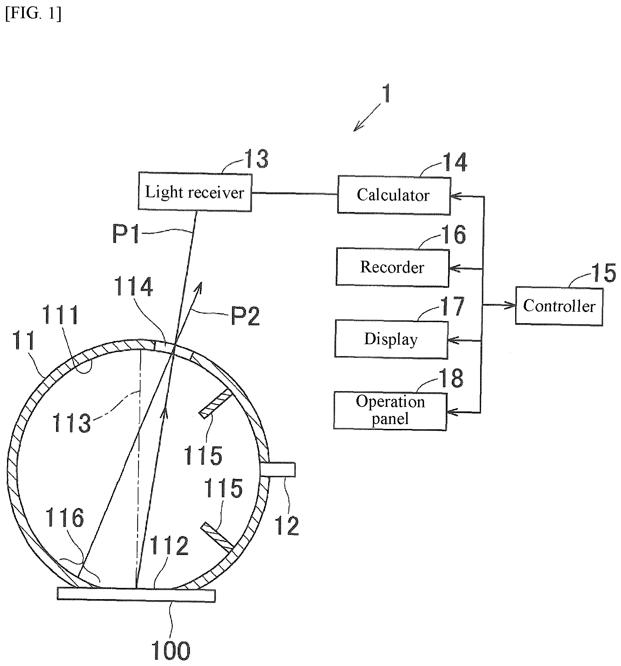

Fig. 1 is a diagram schematically illustrating a configuration of a color measurement device 1 including a spectrophotometer according to an embodiment of the present invention. In Fig. 1, the color measurement device 1 measures the spectral reflectance characteristics of a measurement object 100 having a two-dimensional structure such as a texture. The color measurement device 1 includes an integrating sphere 11, a light source 12, a light receiver 13, a calculator 14, a controller 15, a recorder 16, a display 17, an operation panel 18, and the like.

The integrating sphere 11 is a hollow sphere, with its inner wall 111 coated with a white diffuse reflective coating material having high diffusivity and high reflectance, such as magnesium oxide or barium sulfate. The integrating sphere 11 is configured to cause multiple reflections of a light beam output from the light source 12 on the inner wall 111, thereby generating diffuse light. Examples of the light source 12 include a xenon flash lamp.

In the integrating sphere 11, a measurement aperture 112 is formed at the lower end to allow the measurement object 100 to face therethrough. In addition, in the integrating sphere 11, a light reception aperture 114 is drilled at the position facing the measurement aperture 112, in a direction inclined by 8° with respect to a normal 113 to the aperture surface of the measurement aperture 112. Note that light-shielding walls 115 are formed in the integrating sphere 11 so that the light beam output from the light source 12 does not directly irradiate the measurement aperture 111 and the light reception aperture 114. Furthermore, a part of the inner wall 111 of the integrating sphere 11 serves as a reference region 116 for measuring the reference light.

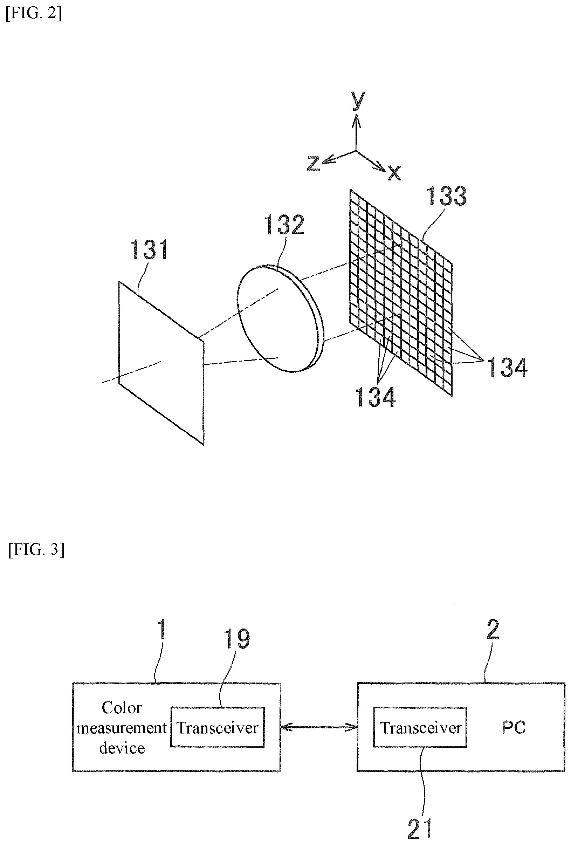

As illustrated in Fig. 2, the light receiver 13 includes a spectroscopic section 131, an imaging lens 132, and an area sensor 133 serving as a two-dimensional imaging element including a CCD sensor or the like.

The spectroscopic section 131 disperses, by wavelength, the light received via the light reception aperture 114. The imaging lens 132 forms an image of the light for each wavelength dispersed by the spectroscopic section 131 onto the area sensor 133.

The area sensor 133, which corresponds to a photoelectric conversion section, includes a plurality of pixels 134 arranged vertically and horizontally as illustrated in Fig. 2. The horizontal direction of the area sensor 133 (x direction in Fig. 2) means the horizontal direction of the physical space. The pixels 134 in the horizontal direction corresponds to regions of the measurement object in the horizontal direction. Meanwhile, the vertical direction of the area sensor 133 (y direction in Fig. 2) corresponds to a wavelength of light. That is, the pixels 134 in a pixel row in the horizontal direction corresponds to a plurality of regions in the one-dimensional direction of the measurement object 100, and the light that is emitted from each region and is wavelength-resolved is received by the pixels 134 in the pixel row in the vertical direction. Thus, in order to perform spectrometry on each region in the two-dimensional direction (plane) of the measurement object 100, it is necessary to perform the spectrometry while moving the measurement object 100 in the y direction in Fig. 2. Alternatively, instead of moving the measurement object 100, the color measurement device may be moved in the y direction in Fig. 2, or both the measurement object 100 and the color measurement device 1 may be moved with a speed difference.

Note that the above-described technique in which the plane of the measurement object 100 is divided into regions each having the size corresponding to each pixel 134 of the area sensor 133, and the light from each region is dispersed to be received by the pixels 134 of the area sensor 133 is known as, for example, a hyperspectral camera or the like.

The measurement data, which is electric signals output from the pixels 134 of the area sensor 133, is converted into digital signals through a current-to-voltage (IV) conversion circuit and an analog-to-digital (AD) conversion circuit (not illustrated) as necessary, and is transmitted to the calculator 14.

The calculator 14 calculates the color and the reflectance for each of the plurality of regions on the measurement object 100, using the transmitted measurement data. In addition, in the present embodiment, the calculator 14 calculates, at the time of measurement, the unevenness correction coefficient and the recursive illumination correction coefficients. Furthermore, the calculator 14 corrects the measurement data using the unevenness correction coefficient and the recursive illumination correction coefficients that have been calculated, and treats it as output values. The unevenness correction coefficient and the recursive illumination correction coefficient will be described below.

The controller 15, which integrally controls the entire color measurement device 1, includes a CPU, RAM, and the like. In the present embodiment, the calculator 14 is also implemented as a part of the functions of the controller 15.

The recorder 16 is a memory that records the unevenness correction coefficient and the recursive illumination correction coefficients that have been calculated, the measurement values (output values) corrected using these correction coefficients, the measurement values before correction (raw data), and the like.

The display 17 displays calculation results by the calculator 6, other data, messages, and the like.

The operation panel 18 is operated by a user when using the color measurement device 1.

The calculator 6 may be incorporated in the color measurement device 1, as in the present embodiment. Alternatively, as illustrated in Fig. 3, the calculator 6 may be implemented by a personal computer 2 (that corresponds to a data processing apparatus, which is, hereinafter, referred to as PC) connected to the color measurement device 1. In this case, the measurement values output from the area sensor 133 and processed into digital signals may be transmitted from a transceiver 19 of the color measurement device 1, via a network, to a transceiver 21 of the PC 2 and then imported into the PC 2. In addition, the calculation results and the like may be recorded in a recorder in the PC 2 or displayed on a display in the PC 2. With such a configuration, it is possible to perform the measurement even when the PC 2 is located away from a measurement site.

Next, a method of measuring the measurement values (for example, the reflectance) of the measurement object 100 using the color measurement device 1 illustrated in Fig. 1 will be described.

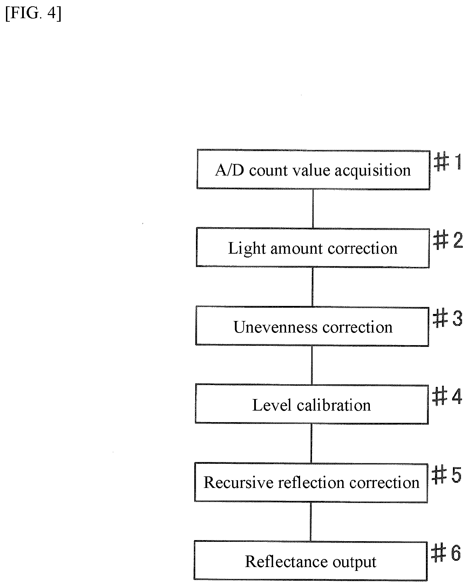

Fig. 4 is a flowchart illustrating a main measurement procedure executed by the color measurement device 1. In the present embodiment, an A/D count value acquisition process (#1), a light amount correction process (#2), an unevenness correction process (#3), a level calibration process (#4), a recursive illumination correction process (#5), and a reflectance output process (#6) are executed in this order.

The A/D count value acquisition process (#1) is the process of acquiring data obtained by converting the light received by the pixels 134 of the area sensor 133 into electric signals and further converting the electric signals into digital signals through the AD conversion circuit. The light amount correction process (#2) is the process of correcting fluctuations of the light source 12.

As will be described below, the unevenness correction process (#3) is the process for correcting pixel-to-pixel non-uniformity caused by the constituent members of the color measurement device 1, and is performed using the unevenness correction coefficient.

The level calibration process (#4) is the process of calibrating the level of the measurement values, and includes the zero calibration.

As will be described below, the recursive illumination correction process (#5) is the process for correcting an error for each pixel 134 of the area sensor 133 caused by re-illumination of light on the inner surface 111 of the integrating sphere 11 of the color measurement device 1, and is performed using the recursive illumination correction coefficients.

The reflectance output process (#6) is the process of outputting, to the display 17, the recorder 16, and the like, the measurement value after the processes are performed.

[Unevenness Correction Process]

Next, the unevenness correction process (#3) will be described. The unevenness correction process is the process of correction performed to eliminate a measurement error for each portion of the measurement surface of the measurement object 100. As described in the section of Background Art, the measurement error occurs due to the non-uniformity of the constituent members of the color measurement device 1, such as the non-uniformity of illumination, the non-uniformity of light reception, and the non-uniformity of the sensitivity of the area sensor 5.

First, the calculation of the unevenness correction coefficient for performing the correction will be described.

A sample (first sample), having uniform lightness among different portions across its measurement surface, in which the measurement value distribution for each wavelength can be considered to be substantially uniform is measured. Examples of such a first sample include a flat white plate having no unevenness on the surface.

The first sample (white plate) is measured, and the measurement value before correction is set as Count(x, y, λ). Here, (x, y) represents the xy coordinates on the measurement surface, and λ represents a wavelength (nm). The xy coordinates on the measurement surface also correspond to the coordinates of the pixels 134 of the area sensor 133.

Let the target value for correction be $Count_{target}(\lambda)$. In a case where the target value such as a reference measurement value of the color measurement device is defined, the value may be used as $Count_{target}(\lambda)$. Alternatively, an average value of a measurement target region such as a measurement diameter, or the like may be set as $Count_{target}(\lambda)$.

In a case where the average value of 11 × 11 pixels at the center of the measurement diameter of the measurement object 100 is set as the target value, $Count_{target}(\lambda)$ is given as follows.

[Mathematical Expression 4]

$$Count_{target}(\lambda) = \sum_{x,y} \frac{Count(x, y, \lambda)}{121}$$

An unevenness correction coefficient Mura(x, y, λ) can be obtained by dividing as follows, so that a measurement value Count(x, y, λ) of the second sample at each pixel 134 of the area sensor 133 and for each wavelength matches the above-described target value.

[Mathematical Expression 5]

$$Mura(x, y, \lambda) = \frac{Count_{target}(\lambda)}{Count(x, y, \lambda)}$$

However, in a case of the above-described calculation method, if dust or a foreign object adheres onto the first sample (white plate) or an internal defect occurs at the time of the measurement for calculating the unevenness correction coefficient, the correction coefficient for only that pixel may become abnormal.

On the other hand, in particular, unevenness due to the non-uniformity of illumination or light reception is generally not a sudden change in a specific pixel, but rather often exhibits a gradual trend. Thus, from the viewpoint of improving the robustness of the correction coefficient, the process of reducing the influence due to the measurement error may be applied to the correction coefficient calculated above. One of the methods is the method of calculating a moving average of a plurality of pixels adjacent to a target pixel. The following is a correction coefficient Mura'(x, y, $\lambda$) in a case of calculating the moving average of $\pm$ 5 pixels adjacent to the target pixel, as an example.

[Mathematical Expression 6]

$$Mura'(x, y, \lambda) = \sum_{x,y\pm5} \frac{Mura_{(x, y, \lambda)}}{121}$$

Using the thus calculated Mura(x, y, $\lambda$), which serves as the unevenness correction coefficient for each pixel(x, y), an error due to the non-uniformity of the constituent members of the color measurement device 1 is corrected (unevenness correction) for the measurement object 100 to be measured. A measurement value after correction Count$_{corr}$(x, y, $\lambda$) is obtained, for example, as follows.

[Mathematical Expression 7]

$$Conut_{corr}(x, y, \lambda) = Mura(x, y, \lambda) * Count(x, y, \lambda)$$

Note that as the unevenness correction coefficient, Mura'(x, y, $\lambda$) after the above-described moving average may be used instead of Mura(x, y, $\lambda$).

In addition, in a case where the non-uniformity of the measurement surface that occurs due to the non-uniformity of the constituent members of the color measurement device 1 is known, the following may be performed. That is, the unevenness correction coefficient is calculated for only a single pixel. Thereafter, correction coefficients for all the pixels may be calculated based on the positional coordinate relationship with known in-plane unevenness caused by the constituent members of the color measurement device, and used as the final correction coefficients. In this case, it is advantageous that there is no need to store the correction coefficient for each pixel, and the correction coefficient for only a single pixel is required.

[Recursive Illumination Correction Process]

Next, the recursive illumination correction process will be described.

As described above, errors cannot be eliminated only through the unevenness correction process, particularly, for samples having lightness different from that of the first sample.

The inventors have considered that a cause of the lightness-dependent error is the pixel dependency of the recursive illumination characteristics that depends on the color measurement device 1.

That is, in an illumination system using the integrating sphere 11, such as d:8° geometry, the light radiated from the surface of the illuminated measurement object 100 is repeatedly diffused and reflected by the inner surface 111 of the integrating sphere 11, and then recursive illumination of illuminating the measurement object 100 again occurs.

In a d:8° geometry illumination light reception system, the light beam radiated from the light source 12 is repeatedly diffused and reflected by the inner surface 111 of the integrating sphere 11, resulting in the diffuse illumination light, which illuminates the measurement surface of the measurement object 100 and the reference region 116 on the inner surface of the integrating sphere 11.

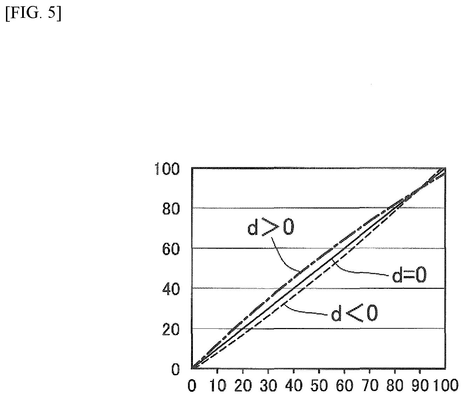

The amount and influence of the recursive illumination depend on the reflectance and aperture ratio of the integrating sphere 11, and the relationship between the optical path from the measurement object 100 (sample optical path (P1 in Fig. 1)) and the optical path from the reference region 116 (reference optical path (P2 in Fig. 1)). Thus, even in the color measurement devices 1 having the same integrating sphere type, the amount and influence of the recursive illumination may differ depending on a model of the device. The values at the zero point and the white point are calibrated by performing the zero calibration and the white calibration, so that it is generally known that the influence of the recursive illumination characteristics becomes prominent in intermediate colors between zero and white, exhibiting a quadratic function characteristic (see Fig. 5). In Fig. 5, the horizontal axis represents the reflectance and the vertical axis represents the reflectance error. The shape of the quadratic function varies depending on the position of the aperture 114.

Thus, a plurality of samples (second samples) with measurement surface lightness different from that of the first sample, each of which has uniform lightness among different portions across its measurement surface, in which the measurement value distribution for each wavelength can be considered to be substantially uniform is measured for each of the color measurement devices 1. Then, the coefficients of a quadratic approximation function representing the recursive illumination characteristics depending on the color measurement device 1 are calculated as the recursive illumination correction coefficients. Then, the value of the above-described quadratic function is subtracted from the measurement value at the time of measurement of the measurement object 100, to reduce the influence of the recursive illumination characteristics. As the second samples, achromatic samples such as white, gray, and black are used.

As described above, the recursive illumination is a phenomenon in which the reflected light from the measurement object 100 is repeatedly diffused and reflected in the integrating sphere 11, and then illuminates the measurement object 100 again. Thus, particularly in a case of a color measurement device having a relatively large measurement diameter, the influence of the recursive illumination may differ depending on the coordinates (pixels) on the measurement surface. In addition, as described above, the recursive illumination characteristics depends on the relationship between the sample optical path P1 and the reference optical path P2. In a case where a sample system and a reference system have completely the same recursive illumination characteristics, both are cancelled in a process of calculating the reflectance or the like to be measured, resulting in no influence on the output of the color measurement device 1.

Next, calculation of the recursive illumination correction coefficients will be described.

The recursive illumination correction using three samples of a sample 2-1 (white plate), a sample 2-2 (gray tile), and a sample 2-3 (black tile) as the second samples, will be described as an example. Let the respective target reflectances, such as the measurement reflectances obtained with a reference color measurement device, be $Rc\_1(\lambda)$, $Rc\_2(\lambda)$, and $Rc\_3(\lambda)$. In addition, let the measurement reflectances of the samples 2-1, 2-2, and 2-3 measured by the color measurement device 1 to be corrected, be $Rs\_1(\lambda)$, $Rs\_2(\lambda)$, and $Rs\_3(\lambda)$, respectively.

As described above, it is generally known that the differences in the recursive illumination characteristics between two different color measurement devices result in quadratic function errors in which the error becomes zero at the common zero calibration point and white calibration point when the reflectance is plotted on the horizontal axis and the reflectance error is plotted on the vertical axis. In addition, the characteristics depend on the device. For this reason, it is possible to perform correction by measuring the sample 2-1, the sample 2-2, and the sample 2-3, each of which has a known target reflectance, using the color measurement device 1 to be corrected, estimating an error amount (quadratic function) due to the recursive illumination characteristics, and subtracting the amount. Specifically, let the recursive illumination error be expressed as follows.

$$\Delta Rn = Rs\_n(x, y, \lambda) - Rc\_n (x, y, \lambda) (n = 1, 2, 3)$$

In addition, the following three points are defined.

$$(X1, Y1) = (Rs\_1(x, y, \lambda), \Delta R1(x, y, \lambda))$$

$$(X2, Y2) = (Rs\_2(x, y, \lambda), \Delta R2(x, y, \lambda))$$

$$(X3, Y3) = (Rs\_3(x, y, \lambda), \Delta R3(x, y, \lambda))$$

A quadratic function passing through the above three points is estimated for each wavelength and each spatial pixel. By letting the second-order, first-order, and zero-order coefficients be $a2\_2(x, y, \lambda)$, $a2\_1(x, y, \lambda)$, and $a2\_0(x, y, \lambda)$, respectively, an exact solution is obtained as follows, since there are three types of undetermined coefficients and three passing points.

$$a2\_2(x, y, \lambda) = ((Y1-Y2)*(X1-X3)-(Y1-Y3)*(X1-X2))/((X1-X2)*(X1-X3)*(X2-X3))$$

$$a2\_1(x, y, \lambda) = (Y1-Y2)/(X1-X2)-(a2\_2)*(X1+X2)$$

$$a2\_0(x, y, \lambda) = Y1-(a2\_2)*X1*X1-(a2\_1)*X1$$

Also for the recursive illumination correction coefficients, from the viewpoint of improving the robustness of the correction coefficient, the process of reducing the influence due to the measurement error may be applied to the correction coefficient calculated above. One of the methods is a method of calculating a moving average of a plurality of pixels adjacent to a pixel for which the coefficients are to be calculated. The followings are correction coefficients in a case of calculating the moving average of $\pm$ 5 pixels adjacent to the pixel for which the coefficients are to be calculated, as an example.

[Mathematical Expression 8]

$$a2\_2'(x,y,\lambda) = \sum_{x,y\pm5} \frac{a2\_2(x,y,\lambda)}{121}$$

$$a2\_1'(x,y,\lambda) = \sum_{x,y\pm5} \frac{a2\_1(x,y,\lambda)}{121}$$

$$a2\_0'(x,y,\lambda) = \sum_{x,y\pm5} \frac{a2\_0(x,y,\lambda)}{121}$$

Using a2_2(x, y, λ), a2_1(x, y, λ), and a2_0(x, y, λ) calculated as described above, which serve as the recursive illumination correction coefficients that depend on the pixel (x, y), the measurement value of the measurement object 100 to be measured is corrected (recursive illumination correction), thereby eliminating the influence of the recursive illumination characteristics of the color measurement device 1.

By letting the reflectances before and after correction be $Ref_0(x, y, \lambda)$ and $Ref_{rerefcorr}(x, y, \lambda)$, respectively, the recursive illumination characteristics can be approximated by a quadratic function, and can be corrected, for example, as follows.

[Mathematical Expression 9]

$$Ref_{rerefcorr}(x,y,\lambda) = Ref_0(x,y,\lambda) - (a2\_2(x,y,\lambda) \times Ref_0(x,y,\lambda)\wedge2 + a2\_1(x,y,\lambda) \times Ref_0(x,y,\lambda) + a2\_0(x,y,\lambda))$$

Note that a2_2'(x, y, λ), a2_1'(x, y, λ), and a2_0'(x, y, λ) after the moving average may be used as the recursive illumination correction coefficients.

Furthermore, in some cases, the recursive reflection correction coefficients a2_2(x, y, λ), a2_1(x, y, λ), and a2_0(x, y, λ) for each pixel are each continuous functions, and can be approximated by a polynomial, such as a quadratic function. In this case, if the correction coefficients are calculated for only a single pixel, the correction coefficients for the remaining pixels can be calculated based on their positional coordinates on the measurement surface, and may be used as the final correction coefficients. In this case, it is advantageous that there is no need to store the correction coefficient for each pixel, and the correction coefficient for only a single pixel is required.

As described above, in the conventional unevenness correction, it is considered that the spatial pixel dependency of the recursive illumination characteristics causes the failure to ensure the high correction accuracy with different lightness, although uniformity is ensured at the calibration point. That is, in a case of performing the conventional unevenness correction at the white point but not performing the recursive illumination correction, or performing the recursive illumination correction but using the same correction coefficients for all pixels, the absolute value accuracy is not sufficiently ensured in intermediate colors or black due to the influence of the recursive illumination characteristics for each pixel of the two-dimensional area sensor 133. It is presumed that the poor uniformity appears within the measurement surface, accordingly. By performing correction using the recursive illumination coefficients, the influence of the recursive illumination characteristics can be eliminated. Furthermore, without causing an unnecessary increase in the size or cost of the color measurement device 1, uniform and error-free measurement among different portions across its measurement surface can be achieved at any lightness the user wants to measure (from low lightness to high lightness), thereby improving the accuracy of the measurement results.

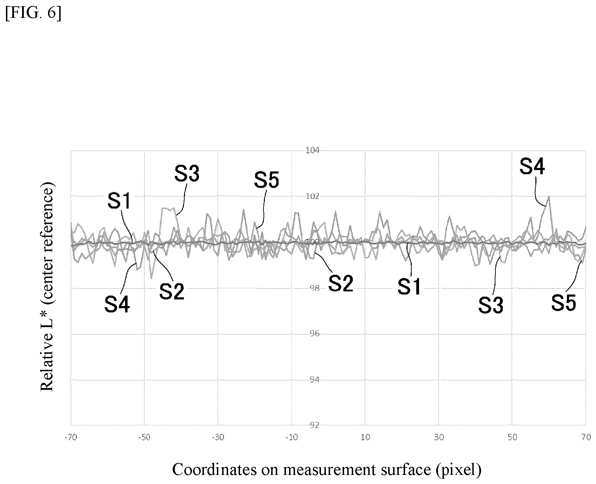

Fig. 6 illustrates a correction effect, and is a graph illustrating the characteristics when the unevenness correction and the recursive illumination correction are performed. The graph of Fig. 6 is a graph corresponding to Fig. 8(a) and (b), with the vertical axis and the horizontal axis each representing the same as in Fig. 8(a) and (b). In the graph, S1 represents the white calibration plate, and S2 to S5 represent the achromatic reference samples whose lightness differs from each other, which are also the same as in Figs. 8 (a) and (b).

As is clear from the graph illustrated in Fig. 6, a significant improvement is seen for the reference samples having different lightness, and errors are eliminated over the entire measurement region through the recursive illumination correction.

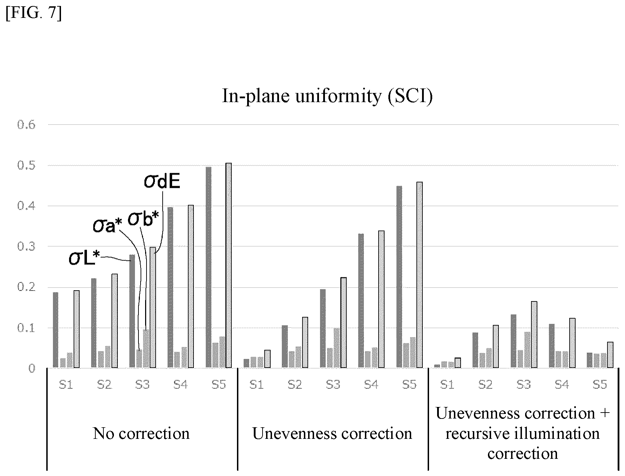

In addition, Fig. 7 is a graph illustrating variations (standard deviations) of the measurement values when different portions across its measurement surface are measured by the color measurement device 1 using the SCI method in each of the cases of performing no correction, performing only the unevenness correction, and performing both the unevenness correction and the recursive illumination correction for each of the samples S1 to S5. Four bars in the graph in each sample represent, from the left, $\sigma L''$, $\sigma a^*$, $\sigma b^*$, and $\sigma dE$.

As is also understood from Fig. 7, performing both the unevenness correction and the recursive illumination correction makes the measurement values of different portions across its measurement surface uniform.

Note that it is not necessary to perform the calculation of the unevenness correction coefficient and the recursive illumination coefficients every time a measurement is performed. It is preferable to store the once-calculated unevenness correction coefficient and recursive illumination coefficients, and retrieve the stored correction coefficients at the time of measurement to perform the correction.

Although the embodiment of the present invention has been described above, the present invention is not limited to the above-described embodiment. For example, both the unevenness correction and the recursive illumination correction are performed, but only the recursive illumination correction may be performed.

In addition, the unevenness correction coefficient and the recursive illumination correction coefficients are calculated for each wavelength, but may be calculated for each of the tristimulus values (X, Y, Z).

In addition, the case where measurement is performed based on the diffuse reflection light of the light from the light source 12 has been described, but the transmitted light may be measured.

This application claims the benefit of priority to Japanese Patent Application No. 2023-029998 filed on February 28, 2023, the disclosure of which is incorporated herein by reference in its entirety.

Industrial Applicability

The present invention is applicable as a color measurement device for measuring color, reflectance, and the like of an object.

Reference Signs List

| | |
|---|---|
| 1 | color measurement device |
| 2 | personal computer (data processing apparatus) |
| 11 | integrating sphere (illumination section) |
| 12 | light source (illumination section) |
| 13 | light receiver |
| 14 | calculator |
| 15 | controller |
| 16 | recorder |
| 17 | display |
| 18 | operation panel |
| 19 | transceiver |
| 21 | transceiver |
| 100 | measurement object |
| 111 | inner surface |
| 112 | measurement aperture |
| 113 | normal |
| 114 | light reception aperture |
| 115 | light-shielding plate |

131    spectroscopic section
132    imaging lens
133    area sensor (photoelectric conversion section)
134    pixel

**Claims**

1.  A color measurement device comprising:

    an illumination section that illuminates a measurement object;
    a photoelectric conversion section that is two-dimensional, and disperses, by wavelength, light from a plurality of positions on a surface of the measurement object illuminated by the illumination section, receives the light, and converts the light into an electric signal;
    calculation means that calculates recursive illumination correction coefficients for correcting an error for a pixel caused by re-illumination in the color measurement device based on a light reception result by the photoelectric conversion section for a plurality of samples whose measurement surface lightness differs from each other, each of which has uniform lightness among different portions across a measurement surface; and
    correction means that corrects a measurement value of the measurement object using the recursive illumination correction coefficients calculated by the calculation means.

2.  The color measurement device according to claim 1, wherein

    the calculation means calculates, based on the light reception result for the samples by the photoelectric conversion section, an unevenness correction coefficient for correcting pixel-to-pixel non-uniformity caused by a constituent member of the color measurement device, and
    the correction means corrects the measurement value of the measurement object using the unevenness correction coefficient calculated by the calculation means.

3.  The color measurement device according to claim 1, wherein the calculation means calculates the recursive illumination correction coefficients for a wavelength that is dispersed.

4.  The color measurement device according to claim 2, wherein the calculation means calculates the unevenness correction coefficient for a wavelength that is dispersed.

5.  The color measurement device according to claim 1, wherein the calculation means calculates the recursive illumination correction coefficients for a tristimulus value.

6.  The color measurement device according to claim 2, wherein the calculation means calculates the unevenness correction coefficient for a tristimulus value.

7.  The color measurement device according to claim 1, wherein the samples are samples in which a measurement value distribution for a wavelength can be considered to be substantially uniform.

8.  The color measurement device according to claim 1, wherein

    the calculation means calculates, through Expression 1 below, a second-order coefficient $a2\_2(x, y, \lambda)$, a first-order coefficient $a2\_1(x, y, \lambda)$, and a zero-order coefficient $a2\_0(x, y, \lambda)$, when performing approximation by a quadratic function in which a horizontal axis represents spectral reflectance and a vertical axis represents deviation from a reference value, as the recursive illumination correction coefficients, and
    the correction means corrects, through Expression 2 below, the measurement value using the quadratic function for the recursive illumination correction coefficients that have been calculated.

[Expression 1]

$$a2\_2(x, y, \lambda) = ((Y1-Y2)*(X1-X3)-(Y1-Y3)*(X1-X2))/((X1-X2)*(X1-X3)*(X2-X3))$$

$$a2\_1(x, y, \lambda) = (Y1-Y2)/(X1-X2)-(a2\_2)*(X1+X2)$$

$$a2\_0(x, y, \lambda) = Y1-(a2\_2)*X1*X1-(a2\_1)*X1$$

Note that x, y represents xy coordinates on a measurement surface, and $\lambda$ represents a wavelength. For three samples, by letting respective target measurement values be Rc_1($\lambda$), Rc_2($\lambda$), and Rc_3($\lambda$), measurement values by a color measurement device to be corrected be Rs_1($\lambda$), Rs_2($\lambda$), and Rs_3($\lambda$), and a recursive illumination error be $\Delta Rn$ = Rs_n(x, y, $\lambda$)-Rc_n(x, y, $\lambda$) (n = 1, 2, 3), the following expressions are satisfied.

$$(X1, Y1) = (Rs\_1(x, y, \lambda), \Delta R1(x, y, \lambda))$$

$$(X2, Y2) = (Rs\_2(x, y, \lambda), \Delta R2(x, y, \lambda))$$

$$(X3, Y3) = (Rs\_3(x, y, \lambda), \Delta R3(x, y, \lambda))$$

[Expression 2]

[Mathematical Expression 10]

$$Ref_{rerefcorr}(x,y,\lambda) = Ref_0(x,y,\lambda) - (a2\_2(x,y,\lambda) \times Ref_0(x,y,\lambda)^{\wedge}2 + a2\_1(x,y,\lambda) \times Ref_0(x,y,\lambda) + a2\_0(x,y,\lambda))$$

Note that, $Ref_0$(x, y, $\lambda$) represents a measurement value before correction, and $Ref_{rerefcorr}$(x, y, $\lambda$) represents a measurement value after correction.

9. The color measurement device according to claim 2, wherein

by letting a target measurement value be $Count_{target}$($\lambda$) and a measurement value of a second sample be Count(x, y, $\lambda$), the calculation means calculates an unevenness correction coefficient Mura(x, y, $\lambda$) through the following expression,

[Mathematical Expression 11]

$$Mura(x,y,\lambda) = \frac{Count_{target}(\lambda)}{Count(x,y,\lambda)}$$

and
the correction means corrects the measurement value Count(x, y, $\lambda$) to a measurement value after correction $Count_{corr}$(x, y, $\lambda$) through the following expression.

[Mathematical Expression 12]

$$Conut_{corr}(x,y,\lambda) = Mura(x,y,\lambda) * Count(x,y,\lambda)$$

10. The color measurement device according to claim 1, wherein the samples include a gray or black tile.

11. The color measurement device according to claim 2, wherein the samples include a white plate.

12. The color measurement device according to claim 1, wherein the calculation means calculates the recursive illumination correction coefficients for a pixel, and then calculates a weighted average of adjacent pixels to obtain final correction coefficients.

13. The color measurement device according to claim 1, wherein the calculation means approximates each of the recursive illumination coefficients by a polynomial when the recursive reflection correction coefficients for pixels have continuity, to calculate coefficients for only a single pixel, and then calculates coefficients for all the pixels based on a positional coordinate on the measurement surface, to obtain final correction coefficients.

14. The color measurement device according to claim 2, wherein the calculation means calculates the unevenness correction coefficient for a pixel, and then calculates a weighted average of adjacent pixels to obtain a final correction coefficient.

15. The color measurement device according to claim 2, wherein the calculation means calculates the unevenness correction coefficient for only a single pixel, and then calculates correction coefficients for all pixels based on positional coordinate relationship with known in-plane unevenness caused by the constituent member of the measurement device, to obtain a final correction coefficient.

16. The color measurement device according to any one of claims 1 to 15, wherein the light from the plurality of positions on the surface of the measurement object is reflected light from a plurality of positions.

17. The color measurement device according to any one of claims 1 to 15, wherein an integrating sphere in which light from a light source is diffused and reflected by an inner surface is used as the illumination section.

18. A data processing apparatus comprising:

reception means that receives, from a color measurement device including an illumination section that illuminates a measurement object, and a photoelectric conversion section that is two-dimensional, and disperses, by wavelength, light from a plurality of positions on a surface of the measurement object illuminated by the illumination section and converts the light into an electric signal, a light reception result by the photoelectric conversion section for a plurality of samples whose measurement surface lightness differs from each other, each of which has uniform lightness among different portions across a measurement surface;
calculation means that calculates recursive illumination correction coefficients for correcting an error for a pixel caused by re-illumination in the color measurement device based on the light reception result received by the reception means; and
correction means that corrects a measurement value of the measurement object using the recursive illumination correction coefficients calculated by the calculation means.

19. A measurement correction method comprising:

an illumination step of illuminating, by an illumination section, a plurality of samples whose measurement surface lightness differs from each other, each of which has uniform lightness among different portions across a measurement surface;
a conversion step of dispersing, by wavelength, light from a plurality of positions on a surface of each sample illuminated by the illumination section, receiving the light, and converting the light into an electric signal by a photoelectric conversion section that is two-dimensional;
a calculation step of calculating recursive illumination correction coefficients for correcting an error for a pixel caused by re-illumination in the color measurement device based on a light reception result by the photoelectric conversion section for the samples; and
a correction step of correcting a measurement value of the measurement object using the recursive illumination correction coefficients calculated in the calculation step.

20. A program for causing a computer to execute:

a reception step of receiving, from a color measurement device including an illumination section that illuminates a measurement object, and a photoelectric conversion section that is two-dimensional, and disperses, by wavelength, light from a plurality of positions on a surface of the measurement object illuminated by the illumination section and converts the light into an electric signal, a light reception result by the photoelectric conversion section for a plurality of samples whose measurement surface lightness differs from each other, each of which has uniform lightness among different portions across a measurement surface;
a calculation step of calculating recursive illumination correction coefficients for correcting an error for a pixel caused by re-illumination in the color measurement device based on the light reception result received in the reception step; and

a correction step of correcting a measurement value of the measurement object using the recursive illumination correction coefficients calculated in the calculation step.

[FIG. 1]

[FIG. 2]

[FIG. 3]

[FIG. 4]

| A/D count value acquisition | #1 |
| --- |
| Light amount correction | #2 |
| Unevenness correction | #3 |
| Level calibration | #4 |
| Recursive reflection correction | #5 |
| Reflectance output | #6 |

[FIG. 5]

[FIG. 6]

[FIG. 7]

In-plane uniformity (SCI)

[FIG. 8]

(a) No correction

(b) Unevenness correction

# INTERNATIONAL SEARCH REPORT

| | International application No. |
|---|---|
| | **PCT/JP2024/004135** |

**A.    CLASSIFICATION OF SUBJECT MATTER**

*G01J 3/50*(2006.01)i; *G01J 3/02*(2006.01)i
FI:    G01J3/50; G01J3/02 C

According to International Patent Classification (IPC) or to both national classification and IPC

**B.    FIELDS SEARCHED**

Minimum documentation searched (classification system followed by classification symbols)

G01J3/50; G01J3/02

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| Y | JP 11-72388 A (MINOLTA CO., LTD.) 16 March 1999 (1999-03-16) paragraphs [0029]-[0088], fig. 1-4 | 1-20 |
| Y | JP 2021-135102 A (PAPALAB CO., LTD.) 13 September 2021 (2021-09-13) paragraphs [0032]-[0060], fig. 1 | 1-20 |
| Y | JP 2017-036937 A (KONICA MINOLTA, INC.) 16 February 2017 (2017-02-16) paragraphs [0025]-[0115], fig. 1-13 | 1-20 |
| Y | JP 2015-178995 A (OPUTOKOMU KK) 08 October 2015 (2015-10-08) paragraphs [0052]-[0066] | 9-15 |
| Y | CN 105424186 A (BEIHANG UNIVERSITY) 23 March 2016 (2016-03-23) paragraphs [0046]-[0052] | 9-15 |

☐ Further documents are listed in the continuation of Box C.      ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **04 March 2024** | **12 March 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT
### Information on patent family members

International application No.

**PCT/JP2024/004135**

| Patent document cited in search report | | | Publication date (day/month/year) | Patent family member(s) | Publication date (day/month/year) |
|---|---|---|---|---|---|
| JP | 11-72388 | A | 16 March 1999 | US 6088117 A columns 6-11, fig 1-4 | |
| JP | 2021-135102 | A | 13 September 2021 | (Family: none) | |
| JP | 2017-036937 | A | 16 February 2017 | (Family: none) | |
| JP | 2015-178995 | A | 08 October 2015 | (Family: none) | |
| CN | 105424186 | A | 23 March 2016 | (Family: none) | |

Form PCT/ISA/210 (patent family annex) (July 2022)

**EP 4 675 242 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 9784614 B2
- JP 2023029998 A